(19)

Europäisches
Patentamt

European
Patent Office

Office européen
des brevets

(11) **EP 4 589 497 A1**

(12) **EUROPEAN PATENT APPLICATION**

(43) Date of publication:
**23.07.2025  Bulletin 2025/30**

(21) Application number: **24168189.9**

(22) Date of filing: **03.04.2024**

(51) International Patent Classification (IPC):
*G06Q 10/04* (2023.01)       *G06Q 10/0631* (2023.01)
*G06Q 50/06* (2024.01)       *H02J 3/00* (2006.01)
*H02J 3/32* (2006.01)         *H02J 3/38* (2006.01)
*G06N 20/00* (2019.01)

(52) Cooperative Patent Classification (CPC):
**G06Q 10/04; G06N 20/00; G06Q 10/0631;
G06Q 50/06; H02J 3/003; H02J 3/004; H02J 3/008;
H02J 3/32; H02J 3/381**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.01.2024   US 202463623683 P**

(71) Applicant: **Hitachi Energy Ltd
8050 Zürich (CH)**

(72) Inventors:
• **HAFIZ, Faeza
  Apex, North Carolina, 27502 (US)**
• **HARJUNKOSKI, Iiro
  69469 Weinheim (DE)**

(74) Representative: **Vossius & Partner
Patentanwälte Rechtsanwälte mbB
Siebertstrasse 3
81675 München (DE)**

(54) **DYNAMIC CAPACITY ALLOCATION OF BATTERY ENERGY STORAGE SYSTEM FOR ANCILLARY SERVICES**

(57)    When supporting ancillary services for a target power system, existing solutions consider a fixed capacity of the battery energy storage system. In contrast, disclosed embodiments leverage a forecast of ancillary events, in combination with an optimization model, to produce an optimal determination for ancillary services. In particular, required capacity may be calculated from the forecast of ancillary events, and a capacity constraint may be generated from the required capacity and incorporated into the optimization model. Then, the optimization model may be solved to produce an optimal determination for ancillary services.

FIG. 1

EP 4 589 497 A1

## Description

## BACKGROUND

Field of the Invention

The embodiments described herein are generally directed to battery energy storage systems, and, more particularly, to dynamically allocating the capacity of a battery energy storage system for ancillary services.

Description of the Related Art

In power systems, ancillary services are required by transmission and distribution networks to maintain stability and power quality. To obtain support for ancillary services, operators of such networks generally prefer to buy capacity from existing distributed energy resources, such as battery energy storage systems (BESS), through ancillary service markets. Owners of battery energy storage systems participate in these markets to generate revenue and support the stabilization of the power grid. The goal of each participating owner of a battery energy storage system is to place an optimal bid for the sale of an ancillary service into the market, in order to maximize revenue.

Traditionally, a forecast of ancillary events is not considered when determining the optimal bid. Rather, existing solutions consider a fixed capacity of the battery energy storage system, with higher capacities for higher market prices. Such solutions do not ensure optimal usage of the BESS capacity or improve the probability that a bid will be accepted. Accordingly, the present disclosure is directed to overcoming this and other problems discovered by the inventors.

## SUMMARY

Accordingly, systems, methods, and non-transitory computer-readable media are disclosed for dynamically allocating the capacity of a battery energy storage system for ancillary services.

In an embodiment, a method comprises using at least one hardware processor to: for each of one or more future time intervals, receive a forecast of one or more ancillary events within a target system within the future time interval, calculate a required capacity of a battery energy storage system based on the forecast of the one or more ancillary events, generate a capacity constraint based on the required capacity of the battery energy storage system, and incorporate the capacity constraint into an optimization model that models a bidding determination for energy of the battery energy storage system; and compute a solution to the optimization model for the future time interval. The one or more future time intervals may be a plurality of future time intervals.

The method may further comprise using the at least one hardware processor to generate the forecast of the one or more ancillary events. Generating the forecast of the one or more ancillary events may comprise applying a predictive model to one or more input features to forecast an occurrence of the one or more ancillary events within the future time interval. The one or more input features may comprise one or more weather parameters for a geographical location of the target system that are forecasted for the future time interval. The one or more input features may comprise a load of the target system that is forecasted for the future time interval. The one or more input features may comprise an indication of a historical frequency of the one or more ancillary events in the target system.

The predictive model may comprise a machine-learning algorithm. The machine-learning algorithm may be a deep neural network.

The forecast, output by the predictive model, may comprise a number of the one or more ancillary events predicted to occur within the future time interval. The required capacity of the battery energy storage system may be calculated based on the number of the one or more ancillary events predicted to occur within the future time interval. The required capacity of the battery energy storage system may be calculated further based on a maximum capacity of the battery energy storage system and a charging or discharging efficiency of the battery energy storage system. The capacity constraint may limit one or both of an amount of energy that can be discharged from the battery energy storage system or an amount of energy that can be used to charge the battery energy storage system, in the solution to the optimization model, to the required capacity.

The one or more ancillary events may comprise one or both of a frequency-up event in which an electrical frequency within the power system exceeds a nominal frequency by at least predefined amount, or a frequency-down event in which the electrical frequency within the power system is below the nominal frequency by at least the predefined amount.

The method may further comprise using the at least one hardware processor to: generate a market request for the future time interval based on the solution to the optimization model; and send the market request to an ancillary services market or an energy market. The market request may comprise an offer to sell an amount of energy during at least one of the one or more future time intervals, wherein the amount of energy is determined based on the solution to the optimization model. The method may further comprise using the at least one hardware processor to: receive an acceptance of the offer to sell; and during the at least one future time interval, control the battery energy storage system to supply the amount of energy to the target system. Controlling the battery energy storage system may comprise reconfiguring one or more switches in the battery energy storage system.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example architecture, according to an embodiment;
FIG. 4 illustrates an example process for dynamically allocating the capacity of a battery energy storage system for ancillary services, according to an embodiment;
FIG. 5 illustrates an example data flow for dynamically allocating the capacity of a battery energy storage system for ancillary services, according to an embodiment;
FIG. 6 illustrates a process for training a machine-learning algorithm to forecast ancillary events, according to an embodiment; and
FIG. 7 illustrates a process for operating a machine-learning algorithm to forecast ancillary events, according to an embodiment.

## DETAILED DESCRIPTION

In an embodiment, systems, methods, and non-transitory computer-readable media are disclosed for dynamically allocating the capacity of a battery energy storage system for ancillary services. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

## 1. Infrastructure

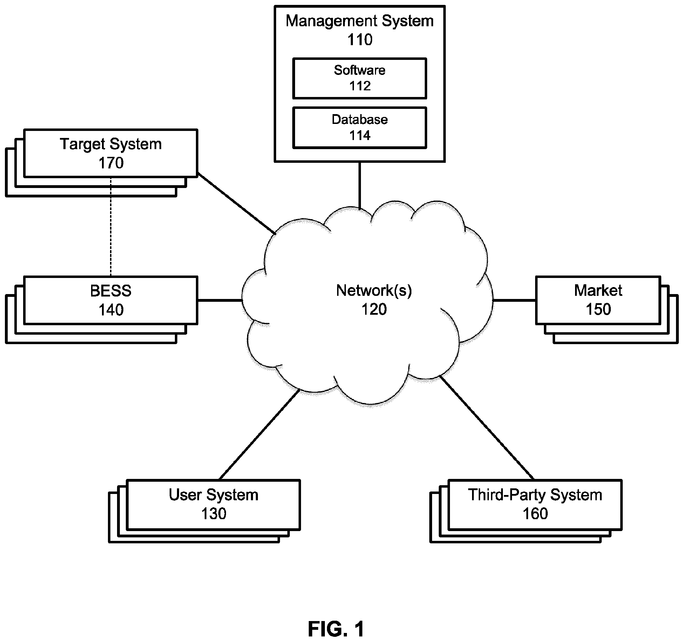

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, battery energy storage systems 140, markets 150, third-party systems 160, and/or target systems 170.
Network(s) 120 may comprise the Internet, and management system 110 may communicate with user system(s) 130, battery energy storage system(s) 140, market(s) 150, third-party system(s) 160, and/or target system(s) 170, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, battery energy storage systems 140, markets 150, third-party systems 160, and/or target systems 170 via the Internet, but may be connected to one or more other user systems 130, battery energy storage systems 140, markets 150, third-party systems 160, and/or target systems 170 via an intranet. Furthermore, while only a few user systems 130, battery energy storage systems 140, markets 150, third-party systems 160, and target systems 170, one instance of software 112, and one database 114 are illustrated, it should be understood that the infrastructure may comprise any number of user systems 130, battery energy storage systems 140, markets 150, third-party systems 160, target systems 170, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a battery energy storage system 140 and/or a participant in market 150 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Battery energy storage system 140 may comprise any system that uses one or more, and generally a plurality of, batteries to store energy (e.g., electric power). Each battery energy storage system 140 may be electrically connected to one or more target systems 170, such that battery energy storage system 140 is capable of supplying energy to target system(s) 170, for example, to provide short-term peak power and/or ancillary services, and/or receiving energy from target system(s) 170, for example, to charge the one or more batteries in battery energy storage system 140. Thus, the operator of battery energy storage system 140 may participate as a supplier and/or consumer in one or more markets 150, which may comprise an ancillary services market and/or energy market in which the operator(s) of target system(s) 170 also participate.

Market(s) 150 may comprise any type or types of computing devices capable of wired and/or wireless communication. However, it is generally contemplated that market 150 would comprise one or more servers that implement a market for a tradeable commodity. In the context, of specific, non-limiting examples that are provided throughout the present disclosure, it will be assumed that market 150 comprises an energy market, in which energy (e.g., electric power) is bought and sold, and/or an ancillary services market, in which ancillary services are bought and sold. Market 150 may enable participants to offer an amount of energy and/or one or more ancillary services and bid on an amount of energy and/or one or more ancillary services, as well as match offers to bids, consummate transactions between matched offers and bids, facilitate the transfer or provision of the purchased energy, and/or the like.

As used herein, the term "ancillary service" refers to any operation, beyond generation and transmission, that supports the reliable transmission of electric power from generators to consumers. An ancillary service may comprise active power or frequency control, reactive power or voltage control, scheduling and dispatch, operating reserves, and/or the like. As an example, for frequency control, an operator of battery energy storage system 140 may commit BESS capacity (e.g., as a seller in an ancillary services market 150) to a power system (e.g., power grid), as target system 170 (e.g., acting as a buyer in the ancillary services market), to ensure that the frequency of the power grid remains within a certain percentage (e.g., +/- 5%) of the nominal frequency. For voltage control, an operator of battery energy storage system 140 may commit BESS capacity to a power grid, as target system 170, to ensure that the voltage in the power grid remains within a certain percentage (e.g., +/- 5%) of the nominal voltage. For scheduling and dispatch, an operator of battery energy storage system 140 may commit BESS capacity to a power grid, as target system 170, for the coordination of generation and transmission units, in order to maintain the reliability of the power grid. For operating reserves, an operator of battery energy storage system 140 may commit BESS capacity to a power grid, as target system 170, to ensure that there is sufficient energy generation to meet the load in the power grid.

Third-party system(s) 160 may comprise any type or types of computing devices capable of wired and/or wireless communication. However, it is generally contemplated that third-party system 160 would comprise one or more servers that supply extrinsic data to management system 110. For instance, the extrinsic data may represent forecast data or data from which a forecast can be derived. As one example, third-party system 160 may comprise a weather service that provides current weather data (i.e., real-time weather data) and/or forecasted weather data (e.g., for a future time interval).

Target system(s) 170 may comprise any type of system for which data are monitored, analyzed, and/or acted upon. However, it is generally contemplated that target system 170 would comprise a power system for which data can be forecasted, and whose operator participates as a supplier and/or consumer in market(s) 150. The power system may comprise a power grid that includes a transmission network and/or distribution network. The power system may comprise one or more power resources, which may include, without limitation, power generators, energy storage systems, electrical loads (e.g., rechargeable energy storage system or other controllable load, non-controllable load, etc.), and/or the like. The power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. The electrical loads may comprise anything that consumes power, including, without limitation, electric vehicles, appliances, machines, commercial buildings, residential buildings, and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

## 2. Example Processing Device

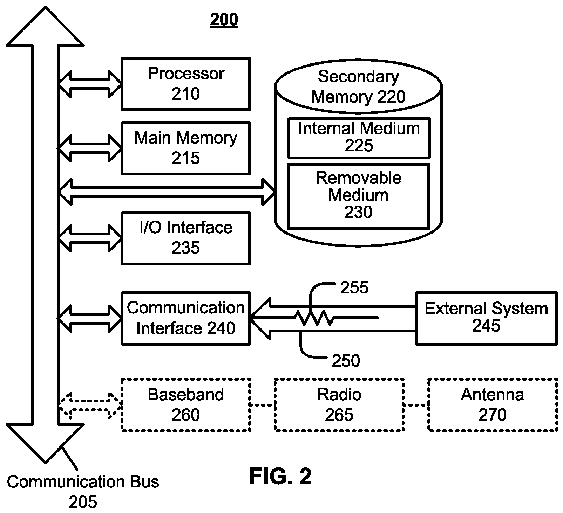

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, battery energy storage system(s) 140, market(s) 150, third-party system(s) 160, target system(s) 170, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210.

Examples of processors 210 which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read-only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a battery energy storage system 140 or target system 170, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. Example Data Flow for Target System Management

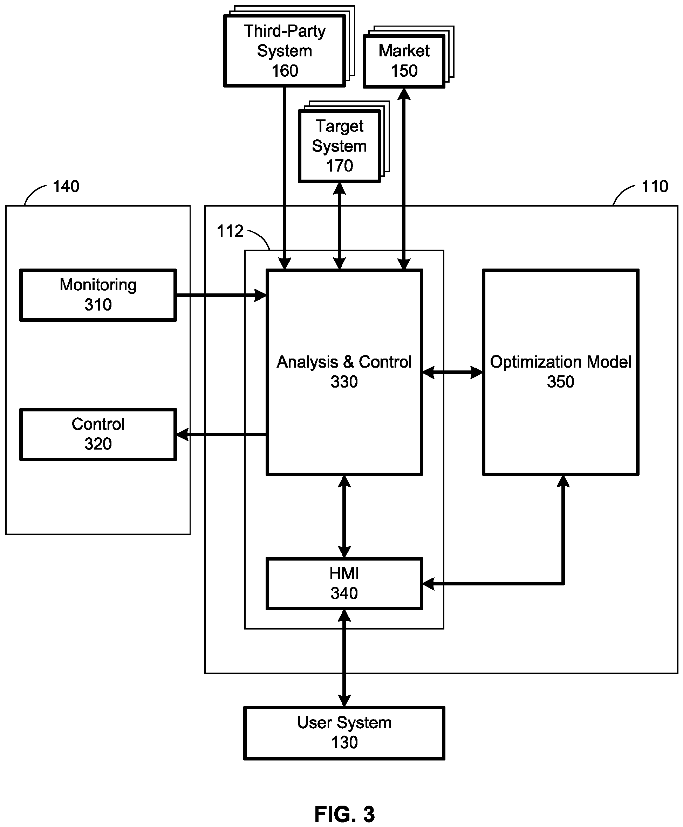

FIG. 3 illustrates an example data flow between a management system 110, a user system 130, a battery energy storage system 140, one or more markets 150, one or more third-party systems 160, and one or more target systems 170, according to an embodiment. Battery energy storage system 140 may comprise a monitoring module 310 and a control module 320. Software 112 of management system 110 may comprise an analysis and control module 330, and a human-to-machine interface (HMI) 340. Analysis and control module 330 may interact with or comprise an optimization model 350, which may be stored in database 114 of management system 110. It should be understood that communications between the various systems may be performed via network(s) 120. In addition, communications between a pair of modules may be performed via an application programming interface (API) provided by one of the modules or by other interprocess communication means.

Monitoring module 310 may monitor and collect data that are output by one or more sensors in battery energy storage system 140. Monitoring module 310 may also otherwise derive data from the collected data. Monitoring module 310 may transmit or "push" the collected and/or otherwise derived data as a BESS system telemetry to analysis and control module 330 (e.g., via an API of analysis and control module 330). Alternatively, analysis and control module 330 may retrieve or "pull" the BESS system telemetry from monitoring module 310 (e.g., via an API of monitoring module 310). The BESS system telemetry may include measurements at each of one or more nodes (e.g., buses) or other points within battery energy storage system 140. These measurements may include, without limitation, a voltage, a current, a frequency, a state of charge of one or more batteries, a charging efficiency, a discharging efficiency, and/or the like. The BESS system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

A target system model may be received from each target system 170. For example, target system 170 may transmit or "push" the target system model to analysis and control module 330 (e.g., via an API of analysis and control module 330). Alternatively, analysis and control module 330 may retrieve or "pull" the target system model from target system 170 (e.g., via an API of target system 170). As another alternative, the target system model may be published through market 150, and either pushed to analysis and control module 330 or pulled by analysis and control module 330. The operator of each target system 140 may publish the target system model within market(s) 150, in order to receive offers in an ancillary services market and/or energy market. The target system model may model target system 170 in such a manner that forecasts about the future operation of target system 170, including occurrences of ancillary events, may be inferred.

Analysis and control module 330 may receive the system telemetry from monitoring module 310, analyze the system telemetry in conjunction with a model of battery energy storage system 140 to determine a configuration for battery energy storage system 140, and then control battery energy storage system 140 to transition to the determined configuration. In particular, analysis and control module 330 may generate control signals that are transmitted to control module 320 of battery energy storage system 140. For example, the control signals may be sent via an API of control module 320. The control signals may be communicated from analysis and control module 330 of management system 110 to control module 320 of battery energy storage system 140 in real time, as the system telemetry is received and analyzed, periodically (e.g., in advance of a sliding or tumbling time window), or in response to a user operation. Analysis and control module 330 may control battery energy storage system 140 automatically (e.g., without any user intervention), semi-automatically (e.g., requiring user approval or confirmation), and/or in response to manual user inputs.

Each third-party system 160 may supply extrinsic data to analysis and control module 330. Third-party system 160 may transmit or push the extrinsic data to analysis and control module 330 (e.g., via an API of analysis and control module 330). Alternatively, analysis and control module 330 may retrieve or pull the extrinsic data from third-party system 160 (e.g., via an API of third-party system 160). The extrinsic data may include any data that are utilized by analysis and control module 330 and that are not available from an intrinsic source, such as monitoring module 310 or database 114. The extrinsic data may comprise one or more historical and/or forecast weather parameters, such as temperature, humidity, solar insolation, wind, barometric pressure, precipitation, alerts, and/or the like. In this case, third-party system 160 may comprise a weather service, such as the United States National Weather Service.

Each market 150 may also supply extrinsic data, such as a historical or current price for energy or ancillary services, to analysis and control module 330. Market 150 may transmit or push the extrinsic data to analysis and control module 330 (e.g., via an API of analysis and control module 330). Alternatively, analysis and control module 330 may retrieve or pull the extrinsic data from market 150 (e.g., via an API of market 150).

Analysis and control module 330 may receive intrinsic data from monitoring module 310 and/or database 114, receive extrinsic data from one or more third-party systems 160 and/or one or more markets 150, receive a target system model for one or more target systems 170, and derive the value of each of one or more parameters of optimization model 350 from the received intrinsic and/or extrinsic data. The received data may itself comprise the value of a parameter, or the value of a parameter may be otherwise derived (e.g., calculated, inferred, interpolated, imputed, etc.) from the received data. The parameters may comprise input parameters and/or constraint parameters. Analysis and control module 330 may input the values of any input parameters into optimization model 350, which may be solved, subject to any constraints defined by the constraint parameters, to produce an optimal bidding determination for selling energy from battery energy storage system 140 and/or buying energy to charge battery energy storage system 140, for a future time.

Based on the optimal bidding determination for the future time, which is output by optimization model 350, analysis and control module 330 may generate and send a market request to market 150 for the future time. The market request may be an offer to sell an amount of energy or BESS capacity, such as an offer to supply or make available an amount of electric power at the future time, or a bid for an amount of an energy, such as a bid to consume an amount of electric power at the future time. Market 150 may receive offers and bids from a plurality of participants, including management system 110, match the bids to offers when possible or else reject bids when no match is possible (e.g., automatically or with approval/denial from market operators), and return the market decisions to the respective participants. The participants, including management system 110, may then make decisions and/or perform operations on battery energy storage system(s) 140 and/or target system(s) 170, based on the market decisions.

As an example, analysis and control module 330 may utilize the optimal bidding determination to sell an ancillary service in an ancillary services market of market 150. Based on this determination, analysis and control module 330 may automatically (i.e., without any user involvement), semi-automatically (e.g., with user approval or confirmation via human-to-machine interface 340), or manually (e.g., in response to a manual user request) generate and send a market request to market 150. Subsequently, analysis and control module 330 may receive a market decision on the market request from market 150 and, automatically, semi-automatically, or manually initiate a control operation, to change a real-time or scheduled operation of battery energy storage system 140, based on the market decision. Initiation of the control operation may comprise transmitting control commands to control module 320 of battery energy storage system 140, which may responsively control battery energy storage system 140 according to the control commands.

Control module 320 of battery energy storage system 140 receives the control signals from analysis and control module 330, and controls one or more components of battery energy storage system 140 in accordance with the control signals. Examples of such control include, without limitation, setting a setpoint (e.g., active and/or reactive power, voltage, etc.), adjusting the power output of one or more batteries, adjusting the charging or discharging of one or more batteries, activating or deactivating a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the current state of battery energy storage system 140 determined from the BESS system telemetry, a predicted state of battery energy storage system 140 determined by analysis and control module 330, a configuration of battery energy storage system 140 determined by analysis and control module 330, a market request, decision, or recommendation for battery energy storage system 140 determined by analysis and control module 330, a control decision or recommendation for battery energy storage system 140 determined by analysis and control module 330, and/or the like. In addition, the graphical user interface may provide inputs that enable a user of user system 130 to configure settings of analysis and control module 330, train, configure, test, and/or deploy optimization model 350, generate and/or send market requests to and/or otherwise participate in market 150, accept or reject market requests, decisions, or recommendations, specify, approve, and/or reject controls to be transmitted to control module 320 of battery energy storage system 140, analyze battery energy storage system 140, and/or the like.

Optimization model 350 may be stored as a data structure in database 114 and accessed by modules, such as analysis and control module 330, via any known means (e.g., via an API of database 114, a direct query of database 114, etc.). For example, optimization model 350 may be loaded into memory (e.g., main memory 215 and/or secondary memory 220) from database 114 and executed by management system 110 as a service (e.g., as a microservice) that is accessible to analysis and control module 330 via an API. Management system 110 may provide an individual optimization model 350 for each battery energy storage system 140 that is managed by management system 110, and/or a collective optimization model 350 that is used for two or more battery energy storage systems 140.

4. Example Process

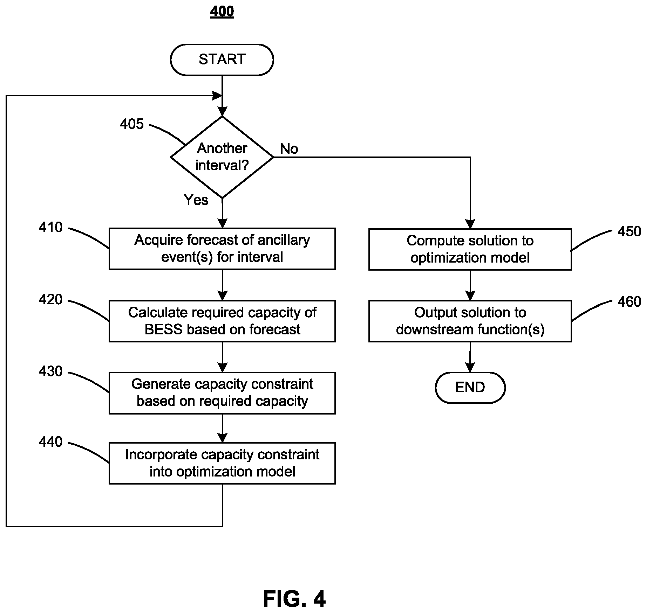

FIG. 4 illustrates an example process 400 for dynamically allocating the capacity of battery energy storage system 140 for ancillary services, according to an embodiment. Process 400 may be implemented by software 112. While process 400 is illustrated with a certain arrangement and ordering of subprocesses, process 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Process 400 may operate iteratively in a sliding or tumbling time window that comprises one or more future time intervals. In an alternative embodiment, process 400 may be executed non-iteratively for a single stationary time window, as needed by an operator of battery energy storage system 140.

In a preferred embodiment, the time window comprises a plurality of future time intervals. The time window may begin with the current time or at a first future time and end at a second future time. The length of the time window may be any value, depending on the particular design goals, the resolution of forecasts, the length of bidding windows within market 150, and/or the like, but should generally be a multiple of the length of the future time interval. Thus, the length of the time window may be a minute, a plurality of minutes, an hour, a plurality of hours, a day, a plurality of days, or the like, and the length of each future time interval may be any length of time that is less than or equal to the time window. In an embodiment, the length of each future time interval and/or the time window may be equal to or a multiple of the length of a bid interval (i.e., units of time for which bids are made) in market 150.

In subprocess 405, it is determined whether or not another future time interval remains to be considered within the time window. When another future time interval remains to be considered (i.e., "Yes" in subprocess 405), process 400 proceeds to subprocess 410. Otherwise, when no future time interval remains to be considered (i.e., "No" in subprocess 405), process 400 may end.

In subprocess 410, a forecast of one or more ancillary events in target system 170, within the future time interval under consideration, is acquired. In an embodiment of subprocess 410, the forecast may be received from another system (e.g., a third-party system 160, market 150, target system 170, etc.). In this case, the forecast may be provided by an operator of target system 170. In an alternative embodiment of subprocess 410, the forecast of the one or more ancillary events may be generated (e.g., by analysis and control module 330), for example, using a target system model provided by the operator of target system 170. In either case, the forecast may comprise a number of ancillary events, including potentially a number of each of a plurality of types of ancillary events, that are predicted to occur within the future time interval under consideration.

Examples of types of ancillary events include, without limitation, a frequency-up event, a frequency-down event, a voltage-up event, a voltage-down event, and the like. A frequency-up event occurs when the electrical frequency within target system 170 exceeds the nominal frequency of target system 170 by at least a predefined amount. In this case, battery energy storage system 140 may absorb energy from target system 170 by charging battery energy storage system 140 from target system 170, to mitigate the rise in the electrical frequency within target system 170. A frequency-down event occurs when the electrical frequency within target system 170 is below the nominal frequency by at least a predefined amount. In this case, battery energy storage system 140 may discharge energy into target system 170, to mitigate the decrease in the electrical frequency within target system 170. The predefined amount may be the same for both frequency-up and frequency-down events. The predefined amount may be defined as a percentage (e.g., +/-5%) of the nominal frequency or a frequency range (e.g., +/- 2.5 hertz). Thus, if the nominal frequency is 50 hertz and the predefined amount is +/- 5% or +/- 2.5 hertz, then a frequency rise above 52.5 hertz would represent a frequency-up event, and a frequency drop below 47.5 hertz would represent a frequency-down event. Voltage-up and voltage-down events can be defined in the same manner. In other words, a voltage-up event may occur when a voltage in target system 170 exceeds a nominal voltage in target system 170 by at least a predefined amount, and a voltage-down event may occur when a voltage in target system 170 is below the nominal voltage by at least a predefined amount. Again, the predefined amount may be the same for both voltage-up and voltage-down events, and may be defined as a percentage (e.g., 5%) of the nominal voltage or a voltage range (e.g., +/- 2.5 volts).

In an embodiment in which the forecast of the ancillary event(s) is generated, the forecast may be generated by applying a predictive model to one or more input features, to forecast an occurrence of the one or more ancillary events in target system 170 within the future time interval under consideration. The one or more input features may comprise one or more weather parameters in a geographical location of target system 170 that have been forecasted for the future time interval under consideration, a load of target system 170 that is forecasted for the future time interval under consideration, an indication of historical frequency of the one or more ancillary events within target system 170, and/or the like. These input feature(s) may be received from, and/or otherwise derived from, data received from one or more other systems (e.g., a third-party system 160, market 150, target system 170, etc.) and/or one or more intrinsic data sources (e.g., database 114, battery energy storage system 140, etc.). The predictive model may comprise a machine-learning algorithm. Examples of suitable machine-learning algorithms include, without limitation, an artificial neural network (e.g., deep neural network), random forest algorithm, linear regression algorithm, logistic regression algorithm, decision tree, support vector machine (SVM), naive Bayes algorithm, k-Nearest Neighbors (kNN) algorithm, K-means algorithm, dimensionality reduction algorithm, gradient-boosting algorithm, and the like.

In subprocess 420, a required capacity of battery energy storage system 140, during the future time interval under consideration, may be calculated, based on the forecast of the ancillary event(s) acquired in subprocess 410. In other words, the amount of BESS capacity, required to mitigate the ancillary event(s), forecasted for target system 170, is calculated. For example, the required capacity may be calculated based on the number of ancillary event(s) predicted to occur in target system 170 within the future time interval under consideration, a maximum capacity of battery energy storage system 140, a charging or discharging efficiency of battery energy storage system 140, and/or the like. In an embodiment, the required capacity may comprise the capacity required for each type of ancillary event. For instance, the required capacity may comprise the capacity required for frequency-up events, the capacity required for frequency-down events, the capacity required for voltage-up events, the capacity required for voltage-down events, and/or the capacity required for each of one or more other types of ancillary events in target system 170. It should be understood that the capacity required for a given type of ancillary event is the amount of BESS capacity that should be reserved to counteract the forecasted occurrences of ancillary events during the future time interval under consideration, to thereby maintain the reliability of target system 170.

As an example, the required capacity $Q_t^{F\_up}$ for frequency-up events for a future time interval $t$ may be calculated as:

$$Q_t^{F\_up} = \frac{\eta_{dc} \cdot Y_{max}^B}{N_t^{F\_up}}$$

wherein $\eta_{dc}$ is the discharging efficiency of battery energy storage system 140, $N_t^{F\_up}$ is the number of occurrences of frequency-up events (e.g., in the forecast acquired in subprocess 410 for target system 170) in the future time interval $t$, and $Y_{max}^B$ is the maximum capacity of battery energy storage system 140 in future time interval $t$.

Similarly, the required capacity $Q_t^{F\_down}$ for frequency-down events for a future time interval $t$ may be calculated as:

$$Q_t^{F\_down} = \frac{Y_{max}^B}{\eta_{ch} \cdot N_t^{F\_down}}$$

wherein $\eta_{ch}$ is the charging efficiency of battery energy storage system 140, and $N_t^{F\_down}$ is the number of occurrences of frequency-down events (e.g., in the forecast acquired in subprocess 410 for target system 170) in the future time interval $t$.

In subprocess 430, a capacity constraint is generated based on the required capacity that was calculated in subprocess 420. In general, the capacity constraint may limit one or both of an amount of energy (e.g., electric power) that can be discharged from battery energy storage system 140 or an amount of energy that can be used to charge battery energy storage system 140, in the solution to optimization model 350, to the required capacity that was calculated in subprocess 420. In the case that the required capacity, calculated in subprocess 420, comprises the capacity required for each of a plurality of types of ancillary events, the capacity constraint may comprise a constraint for each of the plurality of types of ancillary events. Each constraint may constrain a variable in optimization model 350 so as not to exceed the capacity required for a respective type of ancillary event. The constraint may be represented as a mathematical inequality. The variable being constrained may represent at least a parameter of a bidding decision in the solution to optimization model 350.

As an example, the constraint for frequency-up events in future time interval t may be expressed as:

Constraint (1):

$$x_t^{dc,F\_up} \leq Q_t^{F\_up}$$

wherein $x_t^{dc,F\_up}$ is a variable in optimization model 350 whose value in the solution to optimization model 350 represents an amount of electric power to discharge for frequency-up events in future time interval $t$. It should be understood that Constraint (1) ensures that the amount of electric power that is discharged from battery energy storage system 140 for the frequency-up events does not exceed $Q_t^{F\_up}$.

Similarly, the constraint for frequency-down events in future time interval $t$ may be expressed as:

Constraint (2):

$$x_t^{ch,F\_down} \leq Q_t^{F\_down}$$

wherein $x_t^{ch,F\_down}$ is a variable in optimization model 350 whose value in the solution to optimization model 350 represents an amount of electric power to charge for frequency-down events in future time interval *t*. It should be understood that Constraint (2) ensures that the amount of electric power that is charged into the battery storage energy system for frequency-down events does not exceed $Q_t^{F\_down}$.

In subprocess 440, the capacity constraint, generated in subprocess 430, may be incorporated into optimization model 350. For instance, using the examples above, Constraint (1) and Constraint (2) may be added as constraints within optimization model 350, to thereby limit the values of $x_t^{dc,F\_up}$ and $x_t^{ch,F\_down}$ within the solution to optimization model 350. It should be understood that optimization model 350 models a bidding determination for energy of battery energy storage system 140. After incorporating the constraints in subprocess 440, process 400 may return to subprocess 405 to determine whether or not another future time interval remains to be considered.

Optimization model 350 may otherwise be formulated in any suitable manner. At a high level, optimization model 350 may be defined as maximizing an objective function or minimizing an objective function. The objective function may represent a bidding decision for a future time window *T* comprising one or more future time intervals *t*. As one example, optimization model 350 may maximize an objective function representing a profit obtained from the bidding decision:

$$\max\left(Z_{profit} = \sum_{t=1}^{T}(x_t^{sell} - x_t^{buy})\right)$$

wherein $Z_{profit}$ represents the total profit over a future time window *T,* which may comprise one or more future time intervals *t*, for a given bidding decision, $x_t^{sell}$ represents a selling decision (e.g., an amount of energy to sell into market 150) in future time interval *t* in future time window *T,* and $x_t^{buy}$ represents a buying decision (e.g., an amount of energy to buy from market 150) in future time interval *t* in future time window *T*.

The variable $x_t^{sell}$ may be defined as:

$$x_t^{sell} = x_t^{dc,F\_up} + x_t^{ch,F\_down} + \sum_{i}^{N} x_{t,i}$$

wherein $\sum_{i}^{N} x_{t,i}$ represents zero, one, or more additional variables and/or fixed quantities of energy to be sold by battery energy storage system 140 into market(s) 150. It should be understood that the variable $x_t^{buy}$ may be defined, in a similar manner, as the sum of one or more variables and/or fixed quantities of energy to be bought by battery energy storage system 140 from market(s) 150.

In addition to Constraint (1) and Constraint (2), the solution to optimization model 350 may be subject to one or more other constraints. For example, optimization model 350 may comprise a constraint for power balance:

Constraint (3):

$$x_t^{buy} + x_t^{B,dc} = x_t^{sell} + x_t^{B,ch}$$

wherein $x_t^{B,dc}$ is an amount of electric power that is discharged from battery energy storage system 140 in future time interval *t*, and $x_t^{B,ch}$ is an amount of electric power by which battery energy storage system 140 is charged in future time interval *t*.

Optimization model 350 may also comprise a constraint for balancing the state of charge of battery energy storage system 140:

Constraint (4):

$$SOC_t^B = SOC_{t-1}^B + \eta_{ch} \cdot x_t^{B,ch} - \frac{1}{\eta_{dc}} \cdot x_t^{B,dc}$$

wherein $SOC_t^B$ is the state of charge of battery energy storage system 140 in future time interval *t*, and $SOC_{t-1}^B$ is the state of charge of battery energy storage system 140 in time interval *t* - 1.

Optimization model 350 may also comprise a constraint for maintaining the state of charge of battery energy storage system 140:

Constraint (5):

$$SOC^B_{min} \leq SOC^B_t \leq SOC^B_{max}$$

wherein $SOC^B_{min}$ is the minimum state of charge of battery energy storage system 140, and $SOC^B_{max}$ is the maximum state of charge of battery energy storage system 140.

In subprocess 450, the solution to optimization model 350 may be computed for the future time window $T$, which may comprise one or more future time intervals $t$. Any suitable solver may be used to solve optimization model 350. Using the above formulation of optimization model 350, the solver will determine the solution to the objective function that maximizes the output of the objective function $Z_{profit}$.

In subprocess 460, the solution to optimization model 350, computed in subprocess 450, may be output to one or more downstream functions. In an embodiment, the downstream function(s) comprise generating a market request for the future time window $T$, comprising one or more future time intervals $t$, based on the solution to optimization model 350 that was computed in subprocess 450. In particular, analysis and control module 330 may generate the market request, and send the market request to market 150, which may be an ancillary services market, in which ancillary services are bought and sold, and/or an energy market, in which energy (e.g., electric power) is bought and sold.

For example, the market request may comprise an offer to sell an amount of energy during at least one of the one or more future time intervals $t$. The amount of energy in the offer to sell may be determined based on the solution to optimization model 350. In particular, the amount of energy in the offer to sell may be the final value of $x^{sell}_t$ in the solution to optimization model 350.

Subsequently, analysis and control module 330 may receive an acceptance of the offer to sell. Responsively, analysis and control module 330 may control battery energy storage system 140 to supply the amount of energy, in the offer to sell, to target system 170. In particular, analysis and control module 330 may control battery energy storage system 140 (e.g., via control module 320) to supply an amount of electric power from battery energy storage system 140 to target system 170. This control may comprise reconfiguring one or more switches in the power system of battery energy storage system 140 and/or target system 170.

## 5. Example Data Flow

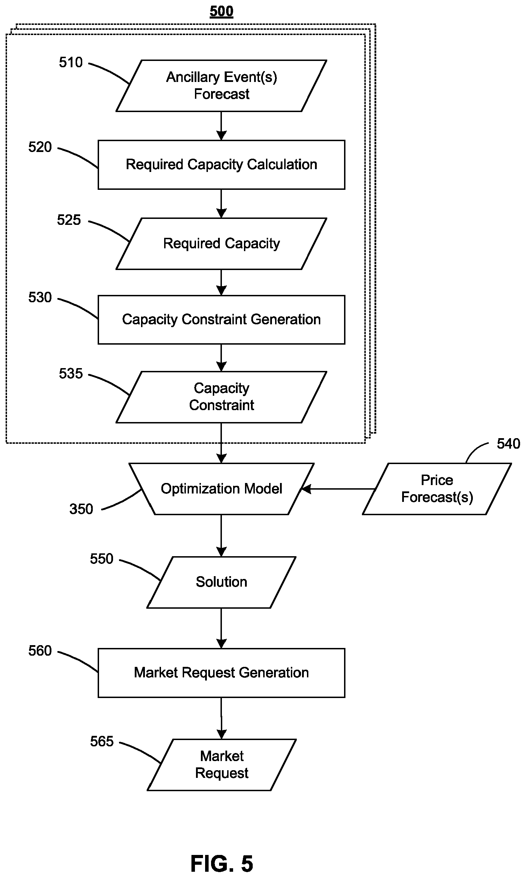

FIG. 5 illustrates an example data flow 500 for dynamically allocating the capacity of battery energy storage system 140 for ancillary services, according to an embodiment. Data flow 500 may be used in the implementation of process 400. Thus, data flow 500 will be described with reference to process 400. In addition, it should be understood that any description of a component in data flow 500 that corresponds to a component described with respect to process 400 applies to that corresponding component, and vice versa.

A forecast 510 of ancillary events is provided to required-capacity-calculation module 520, which may be implemented by analysis and control module 330. Forecast 510 may be acquired as discussed with respect to subprocess 410. Required-capacity-calculation module 520 may implement subprocess 420, to produce a required capacity 525.

Required capacity 525 is provided to capacity-constraint-generation module 530, which may be implemented by analysis and control module 330. Capacity-constraint-generation module 530 may implement subprocess 430, to produce a capacity constraint 535.

As discussed with respect to subprocess 440, capacity constraint 535 may be incorporated into optimization model 350. The data flow represented by components 510-535 may be performed for each future time interval in the future time window for which optimization is to be performed, as represented by the loop of subprocesses 405-440.

One or more price forecasts 540 may be input as input parameters to optimization model 350. Price forecast(s) 540 may comprise a forecast of an energy price (e.g., price of electric power per kilowatt hour, or in another unit) in an energy market of market(s) 150, a forecast of a price for ancillary services in an ancillary services market of market(s) 150, and/or the like. It should be understood that other input parameters may be input to optimization model 350, such as a current configuration of battery energy storage system 140 (e.g., current switch positions, current state of charge, etc.), forecasted weather parameters for each future time interval, and/or the like.

As discussed with respect to subprocess 450, optimization module 350 is solved to produce a solution 550, which may be input into a downstream function, such as market-request-generation module 560. Market-request-generation module 560 may be implemented by analysis and control module 330, and may generate a market request 565, as discussed with respect to subprocess 460.

## 6. Example Machine-Learning Algorithm

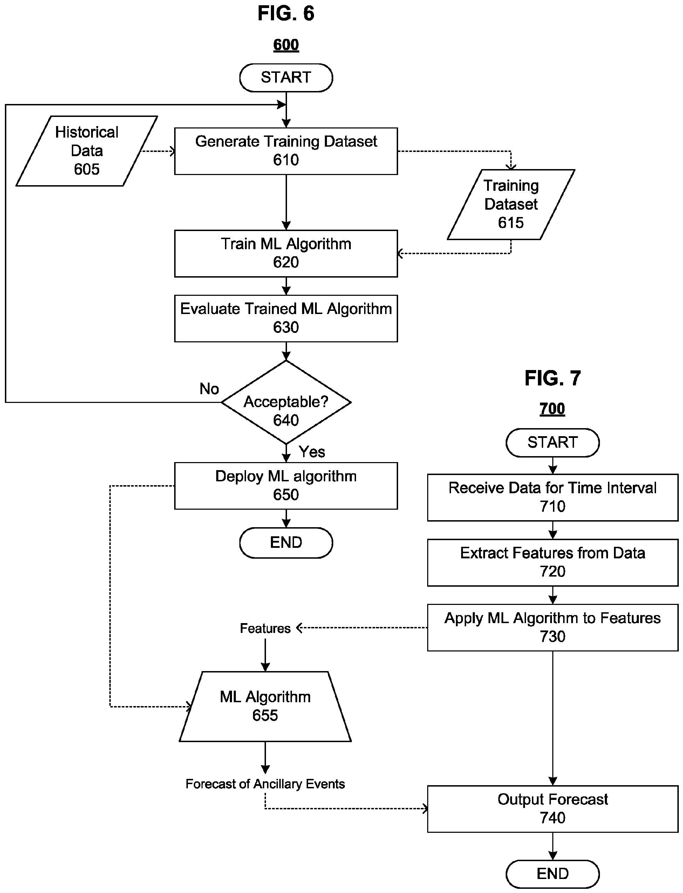

FIG. 6 illustrates a process 600 for training a machine-learning (ML) algorithm to forecast ancillary events, according to an embodiment. Process 600 may be implemented by software 112. Process 600 may be performed under the guidance of a developer, working on behalf of an operator of battery energy storage system 140. While process 600 is illustrated with a certain arrangement and ordering of subprocesses, process 600 may be implemented with fewer, more, or different subprocesses and a different arrangement and/or ordering of subprocesses. It should also be understood that any subprocess, which does not depend on the completion of another subprocess, may be executed before, after, or in parallel with that other independent subprocess, even if the subprocesses are described or illustrated in a particular order.

It should be understood that the machine-learning algorithm that is trained by process 600 may be used as the predictive model to generate the forecast of ancillary event(s) in subprocess 410 of process 400. Thus, the goal of process 600 may be to train a machine-learning algorithm to accurately predict the count or other number of each of one or more types of ancillary events that will occur in target system 170 within a future time interval. Alternatively, the machine-learning algorithm may be trained to predict another parameter of ancillary events in target system 170 within the future time interval.

The input to process 600 may be historical data 605 comprising or consisting of historical values of a plurality of features of target system 170 at a plurality of different past times, as well as indications of ancillary events that occurred during these past times. It should be understood that the plurality of features should represent variables that are relevant to the occurrence of ancillary events. For example, the plurality of features may comprise one or more weather parameters in a geographical location of target system 170 at each past time, a load of target system 170 at each past time, an indication of historical frequency of the one or more ancillary events in target system 170, and/or the like. Historical data 605 may be received from one or more extrinsic data sources (e.g., third-party system 160, target system 170, etc.) and/or one or more intrinsic data sources (e.g., database 114, etc.).

In subprocess 610, a training dataset 615 is generated from historical data 605. In an embodiment, training dataset 615 comprises a plurality of labeled feature vectors. Each feature vector may contain the value of each of the plurality of features, in historical data 605, and be labeled with a target value, representing the parameter (e.g., number) of ancillary events that was actually observed at the past time at which the values of the plurality of features were observed. The values of the plurality of features may be standardized and/or normalized (e.g., converted to common units of measure) when converting historical data 605 into feature vectors. The target value for each feature vector in training dataset 615 may be derived from the indications of ancillary events in historical data 605, for example, by counting the number of indications of ancillary events during a past time interval corresponding to the feature vector.

In subprocess 620, the machine-learning algorithm is trained using training dataset 615. In particular, the machine-learning algorithm may be trained by minimizing a loss function over a plurality of training iterations.

In each training iteration, one feature vector from training dataset 615 may be input to the machine-learning algorithm to output a forecast from the plurality of features, the loss function may calculate an error between the output value and the target value with which the feature vector is labeled, and one or more weights in the machine-learning algorithm may be adjusted, according to a suitable technique (e.g., gradient descent), to reduce the error. A training iteration may be performed for each of at least a major subset of labeled feature vectors in training dataset 615. A remainder of the training dataset 615 may be used for evaluation of the trained machine-learning algorithm. Examples of suitable machine-learning algorithms include, without limitation, an artificial neural network (e.g., deep neural network), random forest algorithm, linear regression algorithm, logistic regression algorithm, decision tree, support vector machine (SVM), naive Bayes algorithm, k-Nearest Neighbors (kNN) algorithm, K-means algorithm, dimensionality reduction algorithm, gradient-boosting algorithm, and the like.

In subprocess 630, the machine-learning algorithm, trained in subprocess 620, may be evaluated. The evaluation may comprise validating and/or testing the machine-learning algorithm using a portion of training dataset 615 that was not used to train the machine-learning algorithm in subprocess 620. The result of subprocess 630 may be a performance measure for the machine-learning algorithm, such as an accuracy of the machine-learning algorithm. The evaluation in subprocess 630 may be performed in any suitable manner.

In subprocess 640, it is determined whether or not the machine-learning algorithm, trained in subprocess 620, is acceptable based on the evaluation performed in subprocess 630. For example, the performance measure from subprocess 640 may be compared to a threshold or one or more other criteria. If the performance measure satisfies the criteria (e.g., is greater than or equal to the threshold), the machine-learning algorithm may be determined to be acceptable (i.e., "Yes" in subprocess 640). Conversely, if the performance measure does not satisfy the criteria (e.g., is less than the threshold), the machine-learning algorithm may be determined to be unacceptable (i.e., "No" in subprocess 640). When the machine-learning algorithm is determined to be acceptable (i.e., "Yes" in subprocess 640), process 600 may proceed to subprocess 650. Otherwise, when the machine-learning algorithm is determined to be unacceptable (i.e., "No" in subprocess 640), process 600 may return to subprocess 610 to retrain the machine-learning algorithm (e.g., using a new or revised training dataset 615).

In subprocess 650, the trained machine-learning algorithm may be deployed as machine-learning algorithm 655. In an embodiment, machine-learning algorithm 655 receives the values of a plurality of features for a future time interval as an input, and outputs a forecast of ancillary events. Machine-learning algorithm 655 may be deployed by moving machine-learning algorithm 655 from a development environment to a production environment of management system 110. For example, machine-learning algorithm 655 may be made available at an address on management system 110 (e.g., in a microservice architecture) that is accessible to software 112 in subprocess 410. Alternatively, machine-learning algorithm 655 may be comprised in software 112.

FIG. 7 illustrates a process 700 for operating machine-learning algorithm 655 to forecast ancillary events, according to an embodiment. Process 700 may be implemented by software 112, and executed within subprocess 410 of process 400 to acquire the forecast of ancillary events for a future time interval. While process 700 is illustrated with a certain arrangement and ordering of subprocesses, process 700 may be implemented with fewer, more, or different subprocesses and a different arrangement and/or ordering of subprocesses. It should also be understood that any subprocess, which does not depend on the completion of another subprocess, may be executed before, after, or in parallel with that other independent subprocess, even if the subprocesses are described or illustrated in a particular order.

Initially, in subprocess 710, data for the future time interval may be received. For example, data relevant to ancillary events may be retrieved from one or more extrinsic data sources (e.g., third-party system 160, target system 170, etc.) and/or one or more intrinsic data sources (e.g., server database 114). The data may represent weather data forecast for a geographical location of target system 170 the future time interval, load data forecast for target system 170 for the future time interval, historical data for ancillary events in target system 170, and/or the like.

In subprocess 720, the value of each of the plurality of features may be extracted from the data received in subprocess 710. The values of the plurality of features may be extracted in the same manner as they were extracted from historical data 605, in subprocess 610, to generate the feature vectors in training dataset 615. This extraction may include standardizing and/or normalizing the values of the plurality of features in the same manner as in subprocess 610.

In subprocess 730, machine-learning algorithm 655, which was trained in subprocess 620 of process 600 and deployed by subprocess 650 of process 600, may be applied to the features, extracted in subprocess 720. In particular, a feature vector, comprising the value of each of the plurality of features, may be input to machine-learning algorithm 655.

In subprocess 740, the output of machine-learning algorithm 655, comprising or consisting of the parameter (e.g., number) of ancillary events forecasted for target system 170 for the future time interval, may be output. In particular, this forecast may be output to subprocess 420 of process 400.

## 7. Example Embodiments

Disclosed embodiments leverage a forecast 510 of ancillary events, in combination with an optimization model 350, to produce optimal bidding determinations for an ancillary services and/or energy market 150. In particular, for each of one or more future time intervals, forecast 510 is used by required-capacity-calculation module 520 to calculate required capacity 535 for the future time interval in subprocess 420, the calculated required capacity 525 is used by capacity-constraint-generation module 530 to generate capacity constraint 535 for the future time interval in subprocess 430, and the generated capacity constraint 535 is incorporated into optimization model 350, along with price forecast(s) 540 for the future time interval, in subprocess 440. Then, optimization model 350 is solved in subprocess 450 for a future time window, comprising the future time interval(s), to produce a solution 550, representing an optimal bidding determination. This optimal bidding determination may balance the usage of capacity within battery energy storage system 140 between ancillary services and energy markets 150. Solution 550 may be used by market-request-generation module 560 to generate market request 565, which implements the optimal bidding determination, in subprocess 460.

Although embodiments are primarily described herein as being used with a battery energy storage system 140, the disclosed embodiments may also be used with any power system that participates in an ancillary services market. For example, instead of battery energy storage system 140, disclosed embodiments may be applied to a microgrid, virtual power plant, electric vehicle (EV) charging depot, and/or the like, as well as any power system that includes a battery energy storage system 140. In addition, disclosed embodiments may be extended to bidding a capacity for power generation into market 150, instead of or in addition to bidding BESS capacity into market 150.

Because described embodiments reserve energy in battery energy storage system 140 for ancillary services being provided to target system 170, the operator of battery energy storage system 140 may have more leverage in the ancillary services market, which improves the likelihood that the operator's bid will be accepted. Excess energy capacity in battery energy storage system 140 that is not reserved or used for ancillary events may be sold to the energy market. In other words, the reservation of energy for ancillary services, using the constraints incorporated into optimization model 350 in subprocess 440, frees up BESS capacity for bidding in energy markets. This economically benefits the operator of battery energy storage system 140, by enabling the operator to utilize the excess energy capacity in other markets 150 after serving the ancillary services market.

The disclosed embodiments for leveraging a forecast 510 of ancillary events may be an optional user setting, such that the operator of battery energy storage system 140 may turn the use of forecast 510 on and off, at any given time, according to the operator's preference. For example, the operator of battery energy storage system 140 may turn this option off when the operator does not wish to bear the risk of a penalty should the BESS capacity, to be reserved for ancillary services to target system 170, become unavailable after bidding is settled.

Disclosed embodiments may provide numerous advantages over the state of the art. A first objective achievable by disclosed embodiments is to ensure sufficient BESS capacity during ancillary events while maximizing the utilization of BESS capacity. A second objective achievable by disclosed embodiments is to more accurately calculate the capacity requirement for a battery energy storage system 140. A third objective achievable by disclosed embodiments is to enable the optimal bidding of BESS capacity on market(s) 150. A fourth objective achievable by disclosed embodiments is to improve the likelihood of a bid on market 150 being accepted. To achieve one or more of these objectives, example embodiments include, without limitation:

Embodiment 1: A method comprising using at least one hardware processor to: for each of one or more future time intervals, receive a forecast of one or more ancillary events within a target system within the future time interval, calculate a required capacity of a battery energy storage system based on the forecast of the one or more ancillary events, generate a capacity constraint based on the required capacity of the battery energy storage system, and incorporate the capacity constraint into an optimization model that models a bidding determination for energy of the battery energy storage system; and compute a solution to the optimization model for the future time interval. These elements may achieve at least one or more of the first, second, third, or fourth objectives mentioned above.

Embodiment 2: The method of Embodiment 1, further comprising using the at least one hardware processor to generate the forecast of the one or more ancillary events. These elements may achieve at least one or more of the first, second, third, or fourth objectives mentioned above.

Embodiment 3: The method of Embodiment 2, wherein generating the forecast of the one or more ancillary events comprises applying a predictive model to one or more input features to forecast an occurrence of the one or more ancillary events within the future time interval. These elements may achieve at least one or more of the first, second, third, or fourth objectives mentioned above.

Embodiment 4: The method of Embodiment 3, wherein the one or more input features comprise one or more weather parameters for a geographical location of the target system that are forecasted for the future time interval. These elements may achieve at least one or more of the first, second, third, or fourth objectives mentioned above.

Embodiment 5: The method of either Embodiment 3 or 4, wherein the one or more input features comprise a load of the target system that is forecasted for the future time interval. These elements may achieve at least one or more of the first, second, third, or fourth objectives mentioned above.

Embodiment 6: The method of any one of Embodiments 3 through 5, wherein the one or more input features comprise an indication of a historical frequency of the one or more ancillary events in the target system. These elements may achieve at least one or more of the first, second, third, or fourth objectives mentioned above.

Embodiment 7: The method of any one of Embodiments 3 through 6, wherein the predictive model comprises a machine-learning algorithm. These elements may achieve at least one or more of the first, second, third, or fourth objectives mentioned above.

Embodiment 8: The method of Embodiment 7, wherein the machine-learning algorithm is a deep neural network. These elements may achieve at least one or more of the first, second, third, or fourth objectives mentioned above.

Embodiment 9: The method of any one of Embodiments 3 through 8, wherein the forecast, output by the predictive model, comprises a number of the one or more ancillary events predicted to occur within the future time interval. These elements may achieve at least one or more of the first, second, third, or fourth objectives mentioned above.

Embodiment 10: The method of Embodiment 9, wherein the required capacity of the battery energy storage system is calculated based on the number of the one or more ancillary events predicted to occur within the future time interval. These elements may achieve at least one or more of the first, second, third, or fourth objectives mentioned above.

Embodiment 11: The method of Embodiment 10, wherein the required capacity of the battery energy storage system is calculated further based on a maximum capacity of the battery energy storage system and a charging or discharging efficiency of the battery energy storage system. These elements may achieve at least one or more of the first, second, third, or fourth objectives mentioned above.

Embodiment 12: The method of Embodiment 11, wherein the capacity constraint limits one or both of an amount of energy that can be discharged from the battery energy storage system or an amount of energy that can be used to charge the battery energy storage system, in the solution to the optimization model, to the required capacity. These elements may achieve at least one or more of the first, second, third, or fourth objectives mentioned above.

Embodiment 13: The method of any preceding embodiment, wherein the one or more ancillary events comprise one or both of a frequency-up event in which an electrical frequency within the power system exceeds a nominal frequency by at least predefined amount, or a frequency-down event in which the electrical frequency within the power system is below the nominal frequency by at least the predefined amount. These elements may achieve at least one or more of the first, second, third, or fourth objectives mentioned above.

Embodiment 14: The method of any preceding embodiment, further comprising using the at least one hardware processor to: generate a market request for the future time interval based on the solution to the optimization model; and send the market request to an ancillary services market or an energy market. These elements may achieve at least one or both of the third or fourth objectives mentioned above.

Embodiment 15: The method of Embodiment 14, wherein the market request comprises an offer to sell an amount of energy during at least one of the one or more future time intervals, wherein the amount of energy is determined based on the solution to the optimization model. These elements may achieve at least one or both of the third or fourth objectives mentioned above.

Embodiment 16: The method of either Embodiment 14 or 15, further comprising using the at least one hardware processor to: receive an acceptance of the offer to sell; and during the at least one future time interval, control the battery energy storage system to supply the amount of energy to the target system. These elements may achieve at least the third objective mentioned above.

Embodiment 17: The method of Embodiment 16, wherein controlling the battery energy storage system comprises reconfiguring one or more switches in the battery energy storage system. These elements may achieve at least the third objective mentioned above.

Embodiment 18: The method of any preceding embodiment, wherein the one or more future time intervals are a plurality of future time intervals. These elements may achieve at least the third objective mentioned above.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor to:

   for each of one or more future time intervals,

   receive a forecast of one or more ancillary events within a target system within the future time interval,
   calculate a required capacity of a battery energy storage system based on the forecast of the one or more ancillary events,
   generate a capacity constraint based on the required capacity of the battery energy storage system, and
   incorporate the capacity constraint into an optimization model that models a bidding determination for energy of the battery energy storage system; and

compute a solution to the optimization model for the future time interval.

2. The method of Claim 1, further comprising using the at least one hardware processor to generate the forecast of the one or more ancillary events.

3. The method of Claim 2, wherein generating the forecast of the one or more ancillary events comprises applying a predictive model to one or more input features to forecast an occurrence of the one or more ancillary events within the future time interval.

4. The method of Claim 3, wherein the one or more input features comprise one or more weather parameters for a geographical location of the target system that are forecasted for the future time interval, and/or

wherein the one or more input features comprise a load of the target system that is forecasted for the future time interval, and/or

wherein the one or more input features comprise an indication of a historical frequency of the one or more ancillary events in the target system, and/or

wherein the predictive model comprises a machine-learning algorithm, and preferably wherein the machine-learning algorithm is a deep neural network.

5. The method of Claim 3 or 4, wherein the forecast, output by the predictive model, comprises a number of the one or more ancillary events predicted to occur within the future time interval.

6. The method of Claim 5, wherein the required capacity of the battery energy storage system is calculated based on the number of the one or more ancillary events predicted to occur within the future time interval and preferably wherein the required capacity of the battery energy storage system is calculated further based on a maximum capacity of the battery energy storage system and a charging or discharging efficiency of the battery energy storage system.

7. The method of Claim 6, wherein the capacity constraint limits one or both of an amount of energy that can be discharged from the battery energy storage system or an amount of energy that can be used to charge the battery energy storage system, in the solution to the optimization model, to the required capacity.

8. The method of any one of Claims 1 to 7, wherein the one or more ancillary events comprise one or both of a frequency-up event in which an electrical frequency within the power system exceeds a nominal frequency by at least predefined amount, or a frequency-down event in which the electrical frequency within the power system is below the nominal frequency by at least the predefined amount.

9. The method of any one of Claims 1 to 8, further comprising using the at least one hardware processor to:

generate a market request for the future time interval based on the solution to the optimization model; and

send the market request to an ancillary services market or an energy market.

10. The method of Claim 9, wherein the market request comprises an offer to sell an amount of energy during at least one of the one or more future time intervals, wherein the amount of energy is determined based on the solution to the optimization model.

11. The method of Claim 9 or 10, further comprising using the at least one hardware processor to:

receive an acceptance of the offer to sell; and during the at least one future time interval, control the battery energy storage system to supply the amount of energy to the target system.

12. The method of Claim 11, wherein controlling the battery energy storage system comprises reconfiguring one or more switches in the battery energy storage system.

13. The method of any one of Claims 1 to 12, wherein the one or more future time intervals are a plurality of future time intervals.

14. A system comprising:

at least one hardware processor;
software configured to, when executed by the at least one hardware processor,

for each of one or more future time intervals,

receive a forecast of one or more ancillary events within a target system within the future time interval,
calculate a required capacity of a battery energy storage system based on the forecast of the one or more ancillary events,
generate a capacity constraint based on the required capacity of the battery energy storage system, and

incorporate the capacity constraint into an optimization model that models a bidding determination for energy of the battery energy storage system, and

compute a solution to the optimization model for the future time interval.

15. A non-transitory computer-readable medium having instructions stored thereon, wherein the instructions, when executed by a processor, cause the processor to:

for each of one or more future time intervals,

receive a forecast of one or more ancillary events within a target system within the future time interval,
calculate a required capacity of a battery energy storage system based on the forecast of the one or more ancillary events,
generate a capacity constraint based on the required capacity of the battery energy storage system, and
incorporate the capacity constraint into an optimization model that models a bidding determination for energy of the battery energy storage system; and

compute a solution to the optimization model for the future time interval.

**FIG. 1**

**200**

**FIG. 2**

EP 4 589 497 A1

**FIG. 3**

21

<u>400</u>

START

405 — Another interval?

No →

Yes ↓

410 — Acquire forecast of ancillary event(s) for interval

420 — Calculate required capacity of BESS based on forecast

430 — Generate capacity constraint based on required capacity

440 — Incorporate capacity constraint into optimization model

450 — Compute solution to optimization model

460 — Output solution to downstream function(s)

END

**FIG. 4**

**500**

510 — Ancillary Event(s) Forecast

520 — Required Capacity Calculation

525 — Required Capacity

530 — Capacity Constraint Generation

535 — Capacity Constraint

350 — Optimization Model ← 540 — Price Forecast(s)

550 — Solution

560 — Market Request Generation

565 — Market Request

**FIG. 5**

# FIG. 6

## 600

START

Historical
Data
605

Generate Training Dataset
610

Training
Dataset
615

Train ML Algorithm
620

Evaluate Trained ML Algorithm
630

No

Acceptable?
640

Yes

Deploy ML algorithm
650

END

Features

ML Algorithm
655

Forecast of Ancillary Events

# FIG. 7

## 700

START

Receive Data for Time Interval
710

Extract Features from Data
720

Apply ML Algorithm to Features
730

Output Forecast
740

END

Europäisches
Patentamt

European
Patent Office

Office européen
des brevets

# EUROPEAN SEARCH REPORT

**Application Number**

EP 24 16 8189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/402848 A1 (OOKA EINA [US] ET AL) 14 December 2023 (2023-12-14) <br> * abstract * <br> * figures 1,2 * <br> * claim 12 * <br> * paragraph [0025] * <br> * paragraph [0032] * <br> * paragraph [0035] - paragraph [0037] * <br> * paragraph [0044] - paragraph [0046] * <br> * paragraph [0048] * <br> * paragraph [0051] * <br> * paragraph [0076] * <br> ----- | 1-15 | INV. <br> G06Q10/04 <br> G06Q10/0631 <br> G06Q50/06 <br> H02J3/00 <br> H02J3/32 <br> H02J3/38 <br> G06N20/00 |
| | | | TECHNICAL FIELDS SEARCHED (IPC) |
| | | | G06Q <br> H02J <br> G06N |

The present search report has been drawn up for all claims

| Place of search | Date of completion of the search | Examiner |
|---|---|---|
| Munich | 19 September 2024 | Härdeman, David |

EPO FORM 1503 03.82 (P04C01)

## ANNEX TO THE EUROPEAN SEARCH REPORT
## ON EUROPEAN PATENT APPLICATION NO.

EP 24 16 8189

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | Publication date |
|---|---|---|---|
| US 2023402848 A1 | 14-12-2023 | NONE | |